# EUROPEAN PATENT APPLICATION

(11) **EP 4 749 328 A1**
(43) Date of publication of application: **27.05.2026**
(21) Application number: 24214471.5
(22) Date of filing: 21.11.2024
(51) Int. Cl.: G01S 17/89, G01S 7/486, G01S 7/48, G01S 17/02

(54) **MULTIPLE-PULSES-IN-AIR LASER SCANNING SYSTEM WITH AMBIGUITY RESOLUTION BASED ON VARYING PULSE FREQUENCY**

(71) Applicant: Hexagon Innovation Hub GmbH, 9435 Heerbrugg (CH)
(72) Inventor: MASUR, Jan-Michael, 88131 Lindau (DE); KARU, Johannes, 6850 Dornbirn (AT)
(74) Representative: Kaminski Harmann

(57) **Abstract**

The present invention relates to a multiple-pulses-in-air (MPiA) laser scanning system configured for measuring the time-of-flight of laser pulses, wherein the computing unit is configured for triggering the transmitter to transmit the send pulses with a varying pulse frequency, wherein the transmitter is configured to have a dead mode, wherein in the dead mode an increase in pulse frequency is effected, wherein in the course of increasing the pulse frequency, a reduction in pulse energy per individual send pulse of the send pulses is provided such that the pulse energy of the resulting return pulses is reduced such that it is below a detection threshold, and a measurement mode, wherein in the measurement mode a reduction in pulse frequency compared to the dead mode is effected, wherein in the course of reducing the pulse frequency, an increase in pulse energy per individual send pulse of the send pulses is provided such that the pulse energy of the resulting return pulses is increased such that it is above the detection threshold, wherein temporarily send pulses are transmitted in the dead mode, in the following called dead pulses 20, between send pulses transmitted in the measurement mode, in the following called measurement pulses 21, such that between the measurement pulses 21 occurrence of an MPiA ambiguity is prevented without temporarily stopping the transmission of send pulses by the transmitter.

## Description

### Field of Invention

The present invention relates to a multiple-pulses-in-air (MPiA) laser scanning system with two different modes in which the transmitter emits pulses with a varying pulse frequency.

### Background of the invention

Pulse time-of-flight measuring systems are standard solutions nowadays in many different fields of application. The principle used herein substantially consists of emitting pulsed electromagnetic radiation onto a target to be surveyed and subsequently receiving the radiation that is returned by the target, wherein the distance to the target is determined on the basis of the time of flight of the pulses, i.e. the time difference between the transmission of a laser pulse (send pulse) and the reception of its echo (return) coming back from a surface. Using the speed of light, the range to the surface may then be calculated using this measurement.

By way of example, airborne LiDAR systems (LiDAR: light detection and ranging) use the operating principle of time-of-flight (ToF) measurement to measure the distance between a LiDAR sensor in an aircraft and underlying terrain. These ranges, when combined with knowledge of the aircraft's trajectory, can in turn be used to generate a 3D point cloud containing the terrain, as well as features such as buildings and vegetation lying on top of it.

Different approaches are used to detect the returning pulses. In what is known as the threshold value method, a light pulse is detected if the intensity of the incoming radiation exceeds a specific threshold value. This threshold prevents false detection of noise and other interfering signals as useful signal, i.e. light of the emitted pulse returning from the target.

Economic motivations to reduce measurement time, e.g. flight time in an airborne LiDAR system, have incentivized an effort to accelerate data acquisition. One route to accomplish this is to increase the rate at which send pulses are transmitted from the LiDAR scanner, i.e. to increase the so-called pulse repetition frequency (PRF). However, besides hardware constraints, an increase of the pulse repetition frequency gives rise to the so-called multiple-pulses-in-air (MPiA) problem, also called multiple-time-around (MTA) problem. The MPiA problem occurs when the pulse repetition frequency is so high that the time between send pulses is shorter than the time required for an echo to return to the sensor. In this case, a return pulse from a particular transmitted pulse may arrive at the detector only after a number of other intervening transmit pulses have been sent. The received pulse must be assigned to the original send time in question to enable a correct range measurement. The process of this assignment is often referred to as MPiA or MTA disambiguation and the assignment itself is often referred to as the return pulse's MPiA or MTA zone. For example, if a return pulse is assigned to the send pulse immediately preceding it, it is assigned to MPiA zone zero, and an MPiA zone of twenty indicates that there are twenty intervening send pulses.

Furthermore, given a pair of consecutive send pulses, the echo of the latter may nevertheless arrive at the receiver before the echo of the former if it has been reflected off of a target that is closer to the detector by a wide enough margin to allow the latter emitted pulse to arrive first.

Thus, pulses returning to the laser scanner may mix with one another, i.e. return with a different sequence than that with which they were sent. For example, this may be caused by sudden distance jumps between an airborne laser scanner and the target, e.g. in areas of steep terrain or tall buildings, where the MPiA zone may rapidly change as the scanning laser passes onto and off of cliffs or building roofs.

By way of example, the MPiA problem may be conceptualized in terms of the so-called range cycle (RC), defined as half the distance light will travel during the interval between two send pulses, wherein the MPiA problem will arise if the range cycle is less than the distance from the sensor to the target, e.g. the flight altitude of an airborne laser scanner. By way of example, assuming a maximum pulse repetition frequency of 2 MHz in an airborne MPiA laser scanner results in a range cycle of roughly 75 m. In this case, a flying altitude of 2000 m will result in roughly 28 to 29 send pulses in the air at any given time. In such a scenario, each return pulse must be correctly disambiguated in order to obtain correct ranges and an accurate point cloud.

A so-called ambiguity distance is characterized by the longest distance at which the returning signal still returns to the laser scanner within a transmission period, wherein the signal can comprise one or more pulses, that is to say a pulse sequence or a burst.

EP 2 694 996 B1 describes a known approach to address the MPiA problem by using pseudorandom code sequences to modulate the position of send pulses, also known as the pulse position modulation (PPM) technique. The system cycles through a series of PPM code sequences and sequences of return pulses are then compared to the PPM codes, wherein each sequence of returns is assigned to the send pulse sequence such that the effect of the perturbation added by the modulation is minimized.

This approach has the drawback that the computational complexity rises with the number of MPiA zones that must be accommodated. This is because more codes are required for more MPiA zones and the code sequences themselves must be longer to maintain a consistent signal to noise ratio. Thus, as all possible sequences must be compared, computation outlay for the disambiguation is significantly increased.

Another drawback arises due to the length of the code itself and the fact that all returns from the same sequence will be assigned to the same MPiA zone. For code sequences involving dozens of returns, it is likely, e.g. in urban environments, that multiple MPiA zones will actually be represented within the same sequence. Therefore, such a sequence-based approach will particularly lead to MPiA disambiguation errors in areas of rapidly changing elevation.

There are also approaches that aim to solve the MPiA problem by briefly turning off the laser source (e.g. a laser diode) of the LiDAR system from time to time and thus creating a period of time without pulses between two pulses that is long enough so that the two pulses can be clearly assigned without the risk of the MPiA problem occurring. However, such a turning off of the laser source has a negative effect on the longevity and accuracy of the alignment of the laser.

### Object of the Invention

It is an object of the present invention to provide an improved MPiA laser scanning system which overcomes the above-mentioned problems.

In particular, it is an object of the invention to provide an MPiA laser scanning system having a more efficient and more robust measuring workflow.

In particular, it is an object of the invention to provide an MPiA laser scanning system with improved longevity.

These objects are achieved by realizing the features of the independent claims. Features which further develop the invention in an alternative or advantageous manner are described in the dependent patent claims.

### Summary of the Invention

A first aspect of the present invention relates to a multiple-pulses-in-air (MPiA) laser scanning system, particularly for aerial surveying of an overflown terrain, configured for measuring the time-of-flight of laser pulses. The laser scanning system comprises a laser scanner with a transmitter configured for transmitting a plurality of consecutive laser pulses as send pulses towards a target and a receiver configured for detecting the send pulses returning from the target as return pulses. Further, the laser scanning system comprises a computing unit configured for determining a measurement value indicative of a time-of-flight of one of the send pulses based on an assignment of one of the return pulses to the one of the send pulses.

The computing unit is configured for triggering the transmitter to transmit the send pulses with a varying pulse (transmission) frequency, wherein the transmitter is configured to have a dead mode, wherein in the dead mode an increase in pulse frequency is effected, wherein in the course of increasing the pulse frequency, a reduction in pulse energy per individual send pulse of the send pulses is provided such that - for a nominal measurement distance range for determining the measurement value - the pulse energy of the resulting return pulses is reduced such that it is below a detection threshold, particularly a detection threshold of the receiver.

The transmitter is also configured to have a measurement mode, wherein in the measurement mode a reduction in pulse frequency compared to the dead mode is effected, wherein in the course of reducing the pulse frequency, an increase in pulse energy per individual send pulse of the send pulses is provided such that - for the nominal measurement distance range for determining the measurement value - the pulse energy of the resulting return pulses is increased such that it is above the detection threshold.

In the dead mode, temporarily send pulses are transmitted, in the following called dead pulses, between send pulses transmitted in the measurement mode, in the following called measurement pulses, such that between the measurement pulses occurrence of an MPiA ambiguity is prevented without temporarily stopping the transmission of send pulses by the transmitter.

In other words, the MPiA ambiguity / MPiA problem means that a laser pulse emitted at a later time is reflected prematurely, e.g. at a window of a high-rise building, and thus overtakes a laser pulse emitted at an earlier time, which was not reflected prematurely or unplanned, in the air, causing the laser pulse emitted at a later time to be detected first and thus errors in the assignment of the laser pulses can occur. Whether and how often such an MPiA ambiguity can occur depends on numerous factors / influencing parameters, including, for example, the measurement distance, which in the case of airborne laser systems is determined by the flight altitude / above ground level (AGL) and the alignment of the pulse path of the laser pulse emitted by a laser source (e.g. a laser diode) of the laser scanner, the pulse frequency of the laser pulse, the pulse energy, the surface to be measured, etc.

Due to the fact that, in the present invention, at least one dead pulse, in particular a plurality of dead pulses, is emitted by the laser source of the laser scanner between the measurement pulses, the time between the emission of a measurement pulse and the emission of the subsequent measurement pulse can be set, in particular extended, in such a way that no MPiA problem can occur. The computing unit of the laser scanning system according to the invention determines, e.g. taking into account the aforementioned influencing parameters, at which (time) spacing the respective measuring pulses must be emitted (or how many dead pulses must be emitted between the two measuring pulses) in order to be able to provide the desired prevention of the MPiA problem and thus the more efficient and more robust measuring workflow.

Advantageously, in the laser scanning system according to the invention, the time between the emission of two measurement pulses can be set (or, if necessary, can be extended) by the above-mentioned intermediate activation of the dead mode and thus without the laser source of the laser scanner being switched off in the meantime. Briefly switching off and then switching on such a laser source can lead to a damage of the laser source (e.g. by overheating) and thus negatively affect its longevity.

In an exemplary embodiment of the MPiA laser scanning system according to the invention, the laser scanner can be configured for directing the send pulses towards the target according to a spatial scan pattern having spatially different scan points, wherein the spatial scan pattern can be configured such that a first section of the spatial scan pattern has a higher scan point density than a second section of the spatial scan pattern.

Optionally, the laser scanner can be configured for transmitting at least a part of the send pulses in the first section of the spatial scan pattern in the dead mode, so that the scan point density in the first section is reduced, in particular such that the scan point density of the first section is equal to the scan point density of the second section. Alternatively or additionally, the laser scanner can be configured for transmitting at least a part of the send pulses in the second section of the spatial scan pattern in the dead mode, in particular wherein the number/amount of send pulses transmitted/sent in the first section in the dead mode is adjusted with regard to the number/amount of send pulses transmitted/sent in the second section in the dead mode such that the scan point density of the first section is equal to the scan point density of the second section.

In a further exemplary embodiment of the laser scanning system according to the invention, the laser scanner can be configured for aerial surveying of an overflown terrain, and for generating the spatial scan pattern such that it covers a swath having a transverse extension with respect to a flight direction of the laser scanner, particularly wherein the spatial scan pattern can be an elliptical scan pattern, a linear scan pattern, a circular scan pattern or a zigzag scan pattern. A linear scan pattern can be generated, for example, in such a way that the send pulses are emitted along a plurality of scan lines, each of which only runs from one predefined side to the opposite side of the swath. Thus, there is no reversal/direction change of the scan lines on the two sides of the swath as with the zigzag pattern. To get such a scan pattern, a polygon scanner can be used or an arrangement with a mirror pair plus an appropriately adapted configuration of the laser source, i.e. measurement mode from right-to-left and dead mode from left-to-right, or even in approximation (curved lines) with a prism pair plus an appropriately adapted configuration of the laser source.

In a further exemplary embodiment of the laser scanning system according to the invention, the dead mode can be applied in areas at the lateral ends of the swath.

These embodiments have the advantage that the overflown terrain is scanned with a suitable scan pattern in order to capture scan points over a preferably large area of the overflown terrain in sufficient quantity and distribution / density for the creation of a 3D point cloud of the overflown terrain or a specific target in the overflown terrain with sufficient accuracy. Advantageously, the dead mode is regularly activated in areas in which, due to the design of the scan pattern, a particularly large number of scan points and/or scan points at particularly short distances from each other would be captured, which results in a reduction of the captured scan points in these areas. Due to this overall reduction in scan points, a reduction in the computing power of the computing unit required to process the scan points can be provided, but a sufficient number of scan points are still captured to create the 3D point cloud.

In a further exemplary embodiment of the laser scanning system according to the invention, the computing unit can be configured for generating a 3D point cloud of the target based on the measurement value and targeting information for the send pulses defined by the spatial scan pattern and for carrying out an initial assignment based on range tracking, wherein the return pulse is assigned to one of the send pulses by taking into account a measurement value indicative of a time-of-flight determined based on at least another return pulse. Further, the computing unit can be configured for determining a confidence level of the initial assignment, and for generating an alternative assignment of the return pulse to a different send pulse in case the confidence level is below a defined confidence threshold, and for carrying out a selection of one of the assignments by respectively generating corresponding point cloud sections within the 3D point cloud, and by carrying out a comparison of the point cloud sections with the neighborhood within the 3D point cloud.

In a further exemplary embodiment of the laser scanning system according to the invention, the confidence level can be determined (in 2D space) based on at least one of a similarity of different sections of a chronological course of determined measurement values, a statistical model, and a mathematical measure. Optionally, the laser scanner can be configured for imprinting a regular pulse-position modulation onto the send pulses, and the computing unit can be configured for determining the confidence level based on the pulse-position modulation, and a statistical method and/or mathematical measure, particularly a total variation method.

For example, alternative versions of the 3D point cloud may be generated based on the initial MPiA zone assignment of the return pulse and alternative assignments of the return pulse to MPiA zones immediately above and/or below the initially assigned MPiA zone, e.g. to the closest five MPiA zones above the initially assigned MPiA zone and the closest five MPiA zones below the initially assigned MPiA zone. These so-called redundant points are then positioned whereby they are combined with the targeting information for the send pulses, e.g. trajectory information and calibration information, to generate different versions of the 3D point cloud, or at least of a different section of the 3D point cloud so that high-confidence points, i.e. points having a confidence level above the threshold, are not duplicated. Then, an optimal version of the 3D point cloud or an optimal version of the point cloud section is chosen based on some measure taking into account the neighborhood of the point cloud section.

In particular, under the assumption that the correct MPiA assignment will probably result in the densest neighborhood of points, e.g. provided that many MPiA zones were already correctly identified using range tracking, a density measurement may be used to determine the optimal version.

In a further exemplary embodiment of the laser scanning system according to the invention, the selection can be based on a density criterion for the 3D point cloud. Optionally, it can be assumed that a correct assignment leads to the highest point density within the 3D point cloud.

In some embodiments, unused assignments may be immediately removed from the 3D point cloud data, e.g. to reduce storage and computing efforts, whereas in other embodiments it may be possible to iteratively select optimal redundant points, changing parameters, and reexamining them after each iteration. In the latter case, rejected assignments / rejected redundant points are not removed from the 3D point cloud data until the final iteration, but calculation of the metric used to select them (e.g. the density) is iteratively updated.

In a further exemplary embodiment of the laser scanning system according to the invention, in the dead mode the transmitted dead pulses can have a pulse frequency which is twice as high, in particular 5 times as high, more particularly 10 times as high, as a pulse frequency of the measurement pulses transmitted in the measurement mode (e.g. in the dead mode the transmitted dead pulses can have a pulse frequency above 10 MHz and in the measurement mode the transmitted measurement pulses can have a pulse frequency of 2 MHz).

This embodiment has the advantage that the dead mode and/or the measurement mode can be provided with common laser sources. Optionally, the change from the pulse frequency of the dead mode to the pulse frequency of the measurement mode and vice versa can be provided by the respective laser source itself (e.g. because the laser source can emit pulses at different frequencies) or can be provided by an external modulator that modulates the pulse frequency of the laser pulses according to the desired mode after they have been emitted by the laser source (e.g. the laser source can only emit pulses at one frequency).

Optionally, the laser scanning system according to the invention can provide a change of the frequency at which the laser pulses are emitted from the laser source (e.g. the change from the pulse frequency of the dead mode to the pulse frequency of the measurement mode and vice versa) by means of a trigger signal, in particular wherein the trigger signal can be provided by the computing unit. Thus, in this optional embodiment, the laser source does not provide the change of frequency itself or autonomously (instead, the external trigger forces the laser source to change emission frequency). Further, the pulse frequency is not modulated after emission from the laser source (instead, the pulses are emitted at the desired changed frequency via control through the trigger signal).

In a further exemplary embodiment of the laser scanning system according to the invention, the computing unit can be configured for triggering the transmitter to transmit a first measurement pulse, a second measurement pulse and a third measurement pulse, each having such a pulse energy that each of the resulting return pulses is above the detection threshold, such that the nominal measurement distance range and a time between the transmission of the first measurement pulse and the second measurement pulse and/or a time between the transmission of the second measurement pulse and the third measurement pulse can be matched to each other in such a way that a reflection / an echo of the second measurement pulse cannot arrive at the receiver before (in other words, cannot overtake) a reflection / an echo of the first measurement pulse and/or that a reflection / an echo of the third measurement pulse cannot arrive at the receiver before (in other words, cannot overtake) the reflection / an echo of the second measurement pulse.

Optionally, the computing unit can be configured for triggering the transmitter to transmit at least one dead pulse, in particular a plurality of dead pulses, before the second measurement pulse and after the second measurement pulse (as well as generally between any two measurement pulses).

As described above, the time between the transmission of three measurement pulses can advantageously be set by the intermediate activation of the dead mode and thus without the laser source of the laser scanner being switched off in the meantime. The nominal measurement distance range can lie between 300 m and 6000 m.

In a further exemplary embodiment of the laser scanning system according to the invention, the detection threshold can be an intensity threshold below which pulses are automatically discarded. The computing unit can be configured to set the detection threshold such that the detection threshold is the absolute lower limit of the detection capability of the receiver, so that every return pulse which is detected is, in particular at least in a preselection, classified as a measurement pulse. Alternatively, the computing unit can be configured to set the detection threshold such that the detection threshold is above the absolute lower limit of the detection capability of the receiver, so that return pulses that are not detected and return pulses that are detected but do not exceed the set detection threshold are, in particular at least in a preselection, classified as dead pulses and return pulses that exceed this set detection threshold are, in particular at least in a preselection, classified as measurement pulses.

In this embodiment, the detection threshold is set in such a way that a sufficiently accurate determination of measurement pulses can be provided respectively (almost) no measurement pulses that are detected with a modified / reduced intensity due to unplanned deflection, reflection, etc., are discarded, but nevertheless (almost) no dead pulses are incorrectly classified as measurement pulses.

In a further exemplary embodiment of the laser scanning system according to the invention, the computing unit can be configured to check, in particular by means of a corresponding algorithm, the return pulses classified as measurement pulses and/or classified as dead pulses by the preselection and, if the check indicates that the return pulse classified by the preselection was incorrectly classified, to correct this incorrect classification. In this embodiment, the assignment in dead pulses and measurement pulses is checked again in order to increase the certainty of a correct assignment.

In a further exemplary embodiment of the laser scanning system according to the invention, the laser scanner can comprise a laser source and the increase or the reduction in pulse frequency and in particular also in pulse energy per individual send pulse of the send pulses can be effected by the fact that the laser source can be configured to emit radiation for generating the send pulses and a modulator of the laser scanning system (e.g. an acousto-optic modulator (AOM)) can be arranged downstream of the laser source and can be configured to set the pulse frequency and in particular also the pulse energy for the send pulses, or the laser source itself can be configured to increase or reduce the pulse frequency and in particular also the pulse energy, or the laser scanning system provides a trigger signal to the laser source triggering the laser source to increase or reduce the pulse frequency, in particular wherein the trigger signal is provided by the computing unit. This makes it easy and efficient to switch from dead mode to measurement mode and back again, even when using common laser sources.

In a further exemplary embodiment of the laser scanning system according to the invention, the computing unit can be configured for adjusting the periodicity of the dead mode as a function of a measured distance profile.

In a further exemplary embodiment of the laser scanning system according to the invention, the computing unit can be configured for adjusting the periodicity of the dead mode as a function of the ratio between scan point density and measurement accuracy. Optionally, the dead mode can be used more frequently when the resulting reduced scan point density is still sufficient to provide the desired measurement accuracy.

With the aid of these embodiments of the laser scanning system according to the invention, the desired avoidance (respectively significant reduction) of the MPiA problem can be achieved, while advantageously a more efficient and robust measurement process can be established

A further aspect of the present invention relates to computer program product comprising program code which is stored on a machine-readable medium, or embodied by an electromagnetic wave comprising a program code segment, and has computer-executable instructions for performing, when run on a computing unit of a laser scanning system according to any one of the previous described embodiments, at least the following steps:
- carrying out an initial assignment of a return pulse of a laser scanner to a send pulse of the laser scanner based on range tracking, wherein the return pulse is assigned to the send pulse by taking into account a measurement value indicative of a time-of-flight determined based on at least another return pulse of the laser scanner,
- determining a confidence level of the initial assignment, and generating an alternative assignment of the return pulse to a different send pulse of the laser scanner in case the confidence level is below a defined threshold,
- generating a 3D point cloud based on the initial assignment and targeting information for the send pulses defined by a scanning pattern of the laser scanner, and
- carrying out a selection of one of the assignments by respectively generating corresponding point cloud sections within the 3D point cloud, and by carrying out a comparison of the point cloud sections with the neighborhood within the 3D point cloud,
wherein the computing unit is configured for adjusting the periodicity of the dead mode as a function of a measured distance profile.

### Brief Description of the Drawings

The MPiA laser scanning system according to the invention is described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,

- Fig. 1:: shows an exemplary embodiment of the inventive MPiA laser scanner in the field of airborne surveying;
- Fig. 2:: schematically shows the so-called multiple-pulses-in-air (MPiA) problem;
- Fig. 3:: schematically indicates the transmission of the send pulses and the reception of return pulses corresponding to Fig. 2 as a function of time t;
- Fig. 4:: schematically shows a first aspect of the invention, wherein the MPiA problem is addressed by alternating between measurement mode and dead mode;
- Fig. 5:: schematically shows how the MPiA problem can be prevented by the laser scanning system according to the invention in a measurement situation making use of the dead mode;
- Fig. 6:: exemplarily shows the time sequence of transmitted measurement pulses and transmitted dead pulses;
- Fig. 7:: exemplarily shows a further embodiment of the invention, wherein an MPiA ambiguity within 2D space is resolved based on an analysis in 3D space.

### Detailed Description of the Drawings

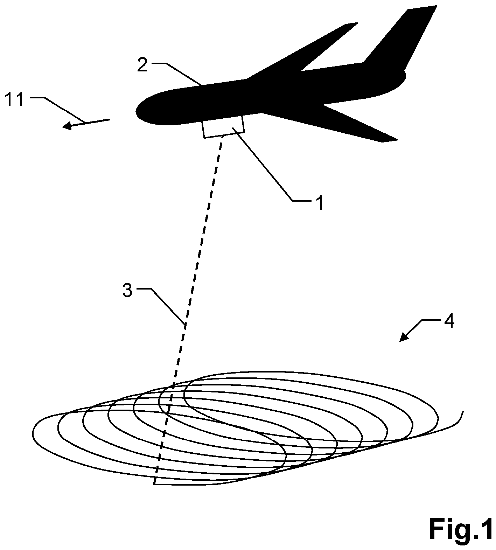

**Figure** 1 shows an exemplary embodiment of the inventive MPiA laser scanner 1 in the field of airborne surveying, wherein the laser scanner 1 is installed in an airborne carrier, e.g. an airplane 2 or satellite. By way of example, the laser scanner 1 is configured for scanning with a circular scan pattern, e.g. using a rotating tilted deflection mirror, wherein an actual scanner pointing direction 3 is indicated. Due to the circular scanning motion by the laser scanner 1 and the forward flight movement of the carrier 2, the surface area is drawing a spiral scan pattern 4 on the ground. Thanks to the spiral scan pattern 4 many surface points will be scanned from two viewing angles, thus minimizing shadow effects.

Usually several additional or complementary data sources and measuring devices are used for improving or calibrating the LiDAR measurement, particularly additional means for determining the position and orientation of the airborne carrier 2, e.g. comprising an altimeter, a device for determining the flight attitude, e.g. giving a yaw angle, a longitudinal angle, and/or a transverse inclination angle of the airplane 2, and measured data of a satellite navigation system carried along in the airplane 2. Furthermore, a known digital 3D model of the overflown terrain might be stored on a central control device of the airplane or on the computing unit of the aerial MPiA laser scanner 1.

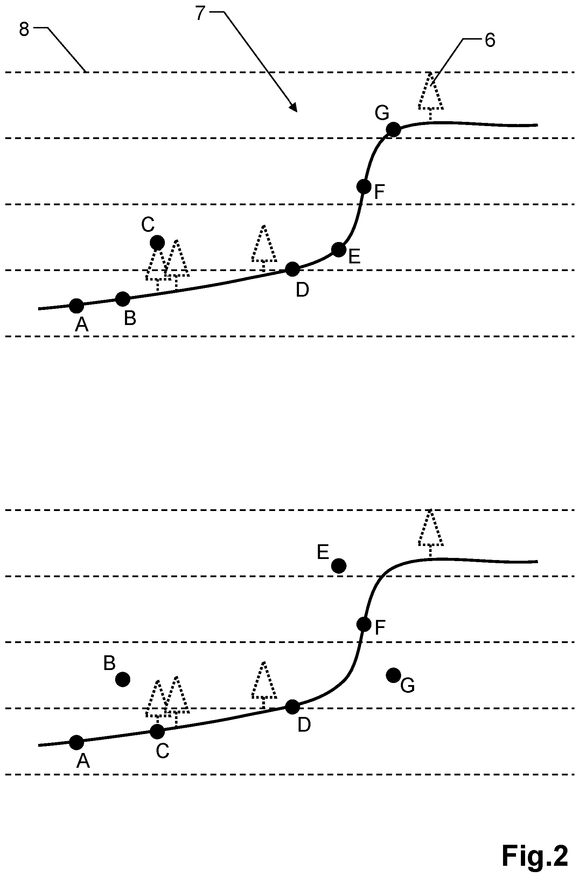

**Figure 2** schematically shows the so-called multiple-pulses-in-air (MPiA) problem occurring when the pulse repetition frequency is so high that the time between send pulses is shorter than the time required for an echo to return to the sensor. In this case there are multiple transmit pulses occurring between an initial send pulse and the reception of its echo.

**Figure 2** shows an airborne surveying scenario in which a laser scanner has been flown over an underlying terrain, from the left to the right of the figure, wherein in the top illustration return pulses A-G are correctly assigned to respective send pulses, i.e. the terrain - including vegetation 6 and a steep cliff 7 - is correctly reproduced by the LiDAR scanning. In the bottom illustration some of the return pulses B, C, E, G have been incorrectly assigned and thus lead to wrong time-of-flights of the send pulses. Therefore, the terrain is not correctly mapped, wherein the map comprises "free-floating" points B, E as well as "subsurface" points G.

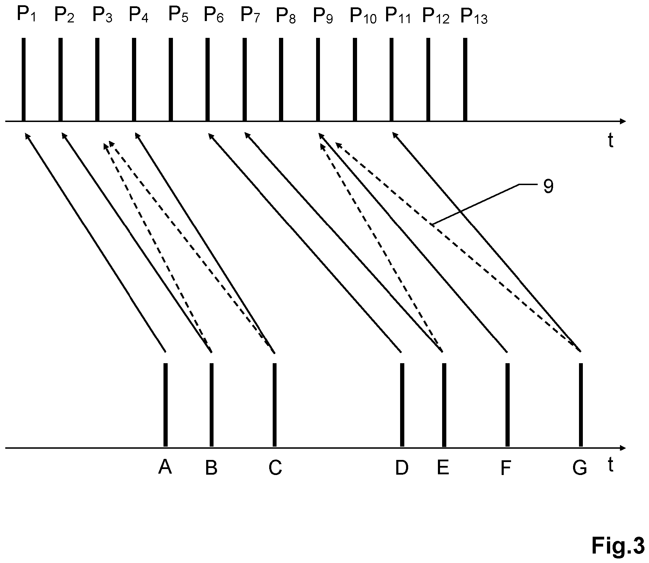

Dashed horizontal lines indicate MPiA zone boundaries 8 according to the exemplary scenario described below for **Fig. 3****.**

**Figure 3** corresponds to the scenario depicted by Fig. 2 and schematically indicates the transmission of the send pulses P₁-P₁₃ and the reception of return pulses A-G as a function of time t.

Although the first two send pulses P₁ and P₂ occur over terrain where the correct MPiA zone for the corresponding returns A and B is four, the tall tree encountered by the third send pulse P₃ results in a reduction of one MPiA zone for return pulse C. The terrain at send pulse P₆ is on the border between MPiA zones three and four due to the rising ground elevation (return pulse D). The steep terrain overflown at send pulses P₇₋₁₁ results in a rapid transition from MPiA zone three to MPiA zone one for return pulses E, F, and G as the range (and thus the time-of-flight) between the ground and sensor is reduced.

Tall objects such as trees (return pulse C), steep terrain (return pulses E, F, and G), and even gradual terrain changes (return pulse D), will, in general, lead to MPiA zone transitions that complicate the MPiA problem. Erroneous disambiguation 9 will lead to incorrect range calculation and the artifacts noted in the lower illustration of **Fig. 2****.**

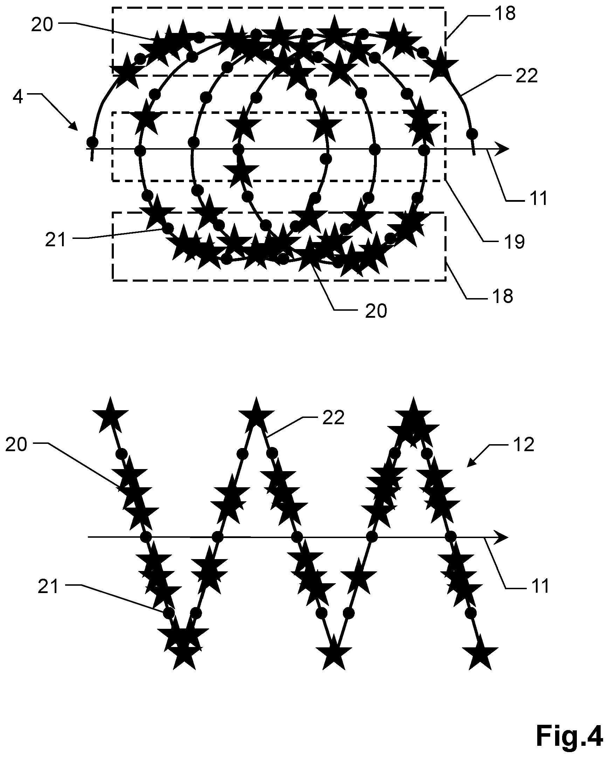

**Figure 4** exemplarily shows a first aspect of the invention, wherein the MPiA problem is addressed in that the laser scanning system is configured for alternating between measurement mode and dead mode. By way of example, as depicted in the top illustration, the laser scanner is configured for generating a spatial scan pattern, here a circular scan pattern 4, such that it has a transverse extension with respect to a flight direction 11 of the laser scanner, wherein in the first section 18 of the circular scan pattern 4, which lies at the extremes of the transverse extension, the scan point density is higher than in the second section 19 of the circular scan pattern 4, which lies in the center of the transverse extension.

In this example, the laser scanner is configured for carrying out the dead mode for some send pulses, labeled here as the dead pulses 20, (mainly but not exclusively) in the first section 18 of the circular scan pattern 4 between respectively two measurement pulses 21, so that the scan point density in the first section 18 is reduced such that the scan point density of the first section 18 is approximately equal to the scan point density of the second section 19.

In this way, the number of scan points is reduced (mainly but not exclusively) in sections 18 where there are enough scan points anyway, which in turn reduces the total number of scan points and thus the required computing power and processing time. Secondly, the time between two measurement pulses 21, in which no further pulses are detected or classified as a measurement pulse 21, is extended so that the two measurement pulses 21 can be clearly assigned and therefore no MPiA ambiguity is present. The number of dead pulses between the two measurement pulses can vary, e.g. depending on the flight height, in order to generate a dead zone (time range in which a plurality of dead pulses are emitted in sequence) that is long enough to actually remove the MPiA problem.

Alternatively, the dead mode may be carried out at any other fixed or variable repetition rate, e.g. based on a known surface model of the overflown terrain and/or based on a set point density of the LiDAR measurement. To solve the MPiA problem as effectively as possible, it is particularly advantageous if (a plurality of) dead pulses come before and after a single measurement pulse. For example, as depicted in the bottom illustration, the laser scanner is configured for generating a zigzag scan pattern 12, wherein dead pulses 20 are evenly distributed over the spatial scan pattern 12, such that between the measurement pulses 21 occurrence of an MPiA ambiguity is prevented without temporarily stopping the transmission of send pulses by the transmitter.

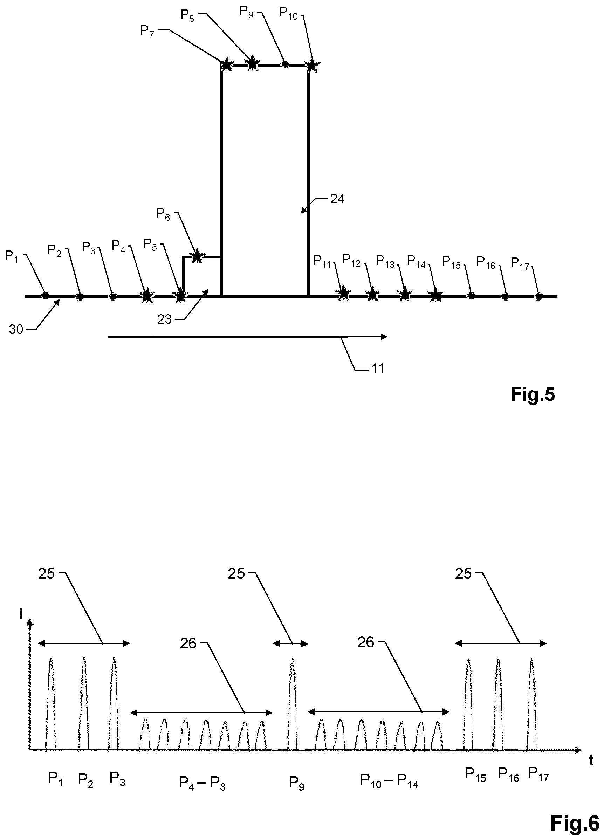

**Figure 5** shows an example of how the MPiA problem can be prevented by the laser scanning system according to the invention in a measurement situation making use of the dead mode.

The figure shows an airborne surveying scenario in which a laser scanner has been flown over an urban area comprising the surface 30 and the buildings 23, 24 of different height. Various measurement pulses P₁-P₃, P₉ and P₁₅-P₁₇ and dead pulses P₄-P₈ and P₁₀-P₁₄ are shown, which were emitted one after the other in flight direction 11 of the aircraft. Due to the large difference in height between the building 23 and building 24, it would be possible, if no dead pulses P₄-P₈ were used and therefore, for example, pulses P₆ and P₇ sent in sequence were also measurement pulses and not dead pulses, that "measurement" pulse P₇ that is reflected, especially in the upper area of building 24, could overtake "measurement" pulse P₆ that hit building 23 before being detected by the receiver in the air and thus would be incorrectly assigned, in other words, the MPiA problem could then occur. The occurrence of the MPiA problem is prevented by the fact that the dead pulses P₄-P₈ were emitted between the measurement pulses P₃ and P₉ and the dead pulses P₁₀-P₁₄ were emitted after the measurement pulse P₉, which effectively extends the time between the measurement pulses P₃ and P₉ and P₉ and P₁₅ without a pulse that exceeds the detection threshold and is therefore classified as a measurement pulse, so that the measurement pulse P₉ and, based on it, the preceding measurement pulses P₁-P₃ and the subsequent measurement pulses P₁₅-P₁₇ can be clearly assigned.

**Figure 6** exemplarily shows a sequence of transmitted measurement pulses P₁-P₃, P₉ and P₁₅-P₁₇ and transmitted dead pulses P₄-P₈ and P₁₀-P₁₄ in a diagram with the intensity I over the time t to illustrate alternating measurement modes 25 and dead modes 26.

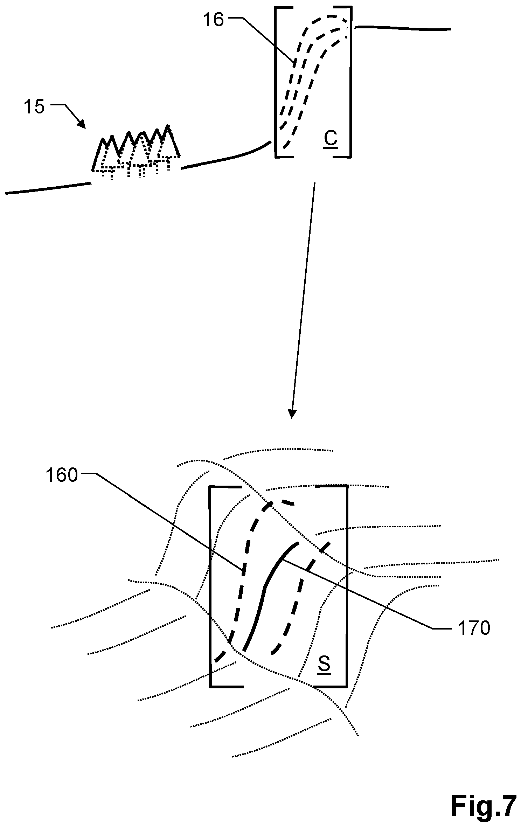

**Figure 7** exemplarily shows a further embodiment of the invention, wherein an MPiA ambiguity within 2D space (top illustration), spanned by sequential time series of return pulses, is converted into the 3D point cloud space (bottom illustration), which provides additional information from the spatial neighborhood of the points in question.

By way of example, a confidence level for the MPiA assignment is determined in 2D space based on a total variation method, wherein the transmitter of the laser scanner is configured for imprinting a regular pulse-position modulation onto the send pulses.

Based on this assessment a critical area C is identified comprising a set of return pulse assignments with a confidence level below a defined threshold. For example, the 2D assessment may provide reasonable indication that a first range jump 15, e.g. over only one or two MPiA zones, is associated to a group of trees and thus it is assumed that here the MPiA assignment is correct. However, 2D analysis may not be able to resolve the jump associated with a steep cliff which extends over a multitude of MPiA zones.

Therefore, the problem is transferred to 3D space in that alternative versions of the 3D point cloud section related to the critical area C are generated based on different MPiA zone assignments of the return pulses within the critical area C, so-called redundant points 16. These redundant points 16 are combined with trajectory information and calibration information in order to be positioned as alternative patches 160 within the section S of the 3D point cloud associated to the critical area C. Then, an optimal version of the 3D point cloud section S, i.e. the best patch 170, is chosen based on comparing the alternative patches 160 with their neighborhood of the point cloud section S.

By way of example, provided that many MPiA zones were already correctly identified in 2D, a density measurement may be used to determine the optimal patch 170.

Although the invention is illustrated above, partly with reference to some preferred embodiments, it must be understood that numerous modifications and combinations of different features of the embodiments can be made. All of these modifications lie within the scope of the appended claims.

## Claims

1. A multiple-pulses-in-air (MPiA) laser scanning system, particularly for aerial surveying of an overflown terrain, configured for measuring the time-of-flight of laser pulses, comprising
• a laser scanner (1) with
∘ a transmitter configured for transmitting a plurality of consecutive laser pulses as send pulses towards a target, and
∘ a receiver configured for detecting the send pulses returning from the target as return pulses, and
• a computing unit configured for determining a measurement value indicative of a time-of-flight of one of the send pulses based on an assignment of one of the return pulses to the one of the send pulses,
**characterized in that**
the computing unit is configured for triggering the transmitter to transmit the send pulses with a varying pulse frequency, wherein the transmitter is configured to have
• a dead mode, wherein in the dead mode an increase in pulse frequency is effected, wherein in the course of increasing the pulse frequency, a reduction in pulse energy per individual send pulse of the send pulses is provided such that - for a nominal measurement distance range for determining the measurement value - the pulse energy of the resulting return pulses is reduced such that it is below a detection threshold, particularly a detection threshold of the receiver, and
• a measurement mode, wherein in the measurement mode a reduction in pulse frequency compared to the dead mode is effected, wherein in the course of reducing the pulse frequency, an increase in pulse energy per individual send pulse of the send pulses is provided such that - for the nominal measurement distance range for determining the measurement value - the pulse energy of the resulting return pulses is increased such that it is above the detection threshold,
wherein temporarily send pulses are transmitted in the dead mode, in the following called dead pulses (20), between send pulses transmitted in the measurement mode, in the following called measurement pulses (21), such that between the measurement pulses (21) occurrence of an MPiA ambiguity is prevented without temporarily stopping the transmission of send pulses by the transmitter.

2. Laser scanning system according to claim 1, wherein the laser scanner (1) is configured for directing the send pulses towards the target according to a spatial scan pattern (4,12) having spatially different scan points, wherein the spatial scan pattern (4,12) is configured such that a first section (18) of the spatial scan pattern (4,12) has a higher scan point density than a second section (19) of the spatial scan pattern (4,12), in particular wherein the laser scanner (1) is configured
• for transmitting at least a part of the send pulses in the first section (18) of the spatial scan pattern (4,12) in the dead mode, so that the scan point density in the first section (18) is reduced, in particular such that the scan point density of the first section (18) is equal to the scan point density of the second section (19), and/or
• for transmitting at least a part of the send pulses in the second section (19) of the spatial scan pattern (4,12) in the dead mode, in particular wherein the number of send pulses transmitted in the first section (18) in the dead mode is adjusted with regard to the number of send pulses transmitted in the second section (19) in the dead mode such that the scan point density of the first section (18) is equal to the scan point density of the second section (19).

3. Laser scanning system according to claim 2, wherein the laser scanner (1) is configured for aerial surveying of an overflown terrain, and for generating the spatial scan pattern (4,12) such that it covers a swath having a transverse extension with respect to a flight direction (11) of the laser scanner (1), particularly wherein the spatial scan pattern(4,12) is an elliptical scan pattern, a linear scan pattern, a circular scan pattern (4) or a zigzag scan pattern (12).

4. Laser scanning system according to one of claims 2 to 3, wherein the computing unit is configured
• for generating a 3D point cloud of the target based on the measurement value and targeting information for the send pulses defined by the spatial scan pattern (4,12),
• for carrying out an initial assignment based on range tracking, wherein the return pulse is assigned to one of the send pulses by taking into account a measurement value indicative of a time-of-flight determined based on at least another return pulse,
• for determining a confidence level of the initial assignment, and for generating an alternative assignment of the return pulse to a different send pulse in case the confidence level is below a defined confidence threshold, and
• for carrying out a selection of one of the assignments by respectively generating corresponding point cloud sections within the 3D point cloud, and by carrying out a comparison of the point cloud sections with the neighborhood within the 3D point cloud.

5. Laser scanning system according to claim 4, wherein the confidence level is determined based on at least one of a similarity of different sections of a chronological course of determined measurement values, a statistical model, and a mathematical measure, particularly wherein
• the laser scanner (1) is configured for imprinting a regular pulse-position modulation onto the send pulses, and
• the computing unit is configured for determining the confidence level based on the pulse-position modulation, and a statistical method and/or mathematical measure, particularly a total variation method.

6. Laser scanning system according to claim 4 or 5, wherein the selection is based on a density criterion for the 3D point cloud, particularly wherein it is assumed that a correct assignment leads to the highest point density within the 3D point cloud.

7. Laser scanning system according to one of the preceding claims, wherein
in the dead mode the transmitted dead pulses (20) have a pulse frequency which is twice as high, in particular 5 times as high, more particularly 10 times as high, as a pulse frequency of the measurement pulses (21) transmitted in the measurement mode.

8. Laser scanning system according to one of the preceding claims, wherein the computing unit is configured for triggering the transmitter to transmit a first measurement pulse (P₃), a second measurement pulse (P₉) and a third measurement pulse (P₁₅), each having such a pulse energy that each of the resulting return pulses is above the detection threshold, such that the nominal measurement distance range and a time between the transmission of the first measurement pulse (P₃) and the second measurement pulse (P₉) and/or a time between the transmission of the second measurement pulse (P₉) and the third measurement pulse (P₁₅) are matched to each other in such a way that an echo of the second measurement pulse (P₉) cannot arrive at the receiver before an echo of the first measurement pulse (P₃), and/or that an echo of the third measurement pulse (P₁₅) cannot arrive at the receiver before the echo of the second measurement pulse (P₉), in particular wherein the computing unit is configured for triggering the transmitter to transmit at least one dead pulse (P₄-P₈, P₁₀-P₁₄), in particular a plurality of dead pulses (P₄-P₈, P₁₀-P₁₄),
• before the second measurement pulse (P₉), and
• after the second measurement pulse (P₉).

9. Laser scanning system according to one of the preceding claims, wherein the detection threshold is an intensity threshold below which pulses are automatically discarded, wherein the computing unit is configured to set the detection threshold such that the detection threshold
• is the absolute lower limit of the detection capability of the receiver, so that every return pulse which is detected is, in particular at least in a preselection, classified as a measurement pulse (21), or
• is above the absolute lower limit of the detection capability of the receiver, so that return pulses that are not detected and return pulses that are detected but do not exceed the set detection threshold are, in particular at least in a preselection, classified as dead pulses (20) and return pulses that exceed this set detection threshold are, in particular at least in a preselection, classified as measurement pulses (21).

10. Laser scanning system according to claim 9, wherein the computing unit is configured to check, in particular by means of a corresponding algorithm, the return pulses classified as measurement pulses (21) and/or classified as dead pulses (20) by the preselection and, if the check indicates that the return pulse classified by the preselection was incorrectly classified, to correct this incorrect classification.

11. Laser scanning system according to one of the preceding claims, wherein the laser scanner (1) comprises a laser source and the increase or the reduction in pulse frequency and in particular also in pulse energy per individual send pulse of the send pulses is effected by the fact that
• the laser source is configured to emit radiation for generating the send pulses and a modulator of the laser scanning system is arranged downstream of the laser source and configured to set the pulse frequency and in particular also the pulse energy for the send pulses, or
• the laser source itself is configured to increase or reduce the pulse frequency and in particular also the pulse energy, or
• the laser scanning system provides a trigger signal to the laser source triggering the laser source to increase or reduce the pulse frequency, in particular wherein the trigger signal is provided by the computing unit.

12. Laser scanning system according to one of the preceding claims, wherein the computing unit is configured for adjusting the periodicity of the dead mode as a function of a measured distance profile.

13. Laser scanning system according to one of the preceding claims, wherein the computing unit is configured for adjusting the periodicity of the dead mode as a function of the ratio between scan point density and measurement accuracy, in particular wherein the dead mode is used more frequently when the resulting reduced scan point density is still sufficient to provide the desired measurement accuracy.

14. Computer program product comprising program code which is stored on a machine-readable medium, or embodied by an electromagnetic wave comprising a program code segment, and has computer-executable instructions for performing, when run on a computing unit of a laser scanning system according to any one of claims 1 to 13, at least the following steps,
• carrying out an initial assignment of a return pulse of a laser scanner (1) to a send pulse of the laser scanner (1) based on range tracking, wherein the return pulse is assigned to the send pulse by taking into account a measurement value indicative of a time-of-flight determined based on at least another return pulse of the laser scanner (1),
• determining a confidence level of the initial assignment, and generating an alternative assignment of the return pulse to a different send pulse of the laser scanner (1) in case the confidence level is below a defined threshold,
• generating a 3D point cloud based on the initial assignment and targeting information for the send pulses defined by a scanning pattern (4,12) of the laser scanner (1), and
• carrying out a selection of one of the assignments by respectively generating corresponding point cloud sections within the 3D point cloud, and by carrying out a comparison of the point cloud sections with the neighborhood within the 3D point cloud,
wherein the computing unit is configured for adjusting a periodicity of the dead mode as a function of a measured distance profile.
